# FASCICULE DE BREVET EUROPEEN

(11) **EP 2 812 940 B1**
(45) Date de publication et mention de la délivrance du brevet: **06.04.2016**
(21) Numéro de dépôt: 13702488.1
(22) Date de dépôt: 05.02.2013
(51) Int. Cl.: H01M 4/134, H01M 4/36, H01M 4/62, H01M 4/66, H01M 4/38, H01M 10/0525, H01M 10/058

(54) **ENSEMBLE COLLECTEUR DE COURANT-ELECTRODE A BASE DE SILICIUM**
ANORDNUNG MIT EINEM STROMABNEHMER UND EINER SILIZIUMELEKTRODE
ASSEMBLY CONSISTING OF A CURRENT COLLECTOR AND A SILICON ELECTRODE

(30) Priorité: 07.02.2012 FR 1251129
(43) Date de publication de la demande: 17.12.2014
(73) Titulaire: Commissariat à l'Énergie Atomique et aux Énergies Alternatives, 75015 Paris (FR)
(72) Inventeur: TIQUET, Pascal, F-38100 Grenoble (FR); DONET, Sébastien, F-38112 Meaudre (FR); FILHOL, Lionel, F-38160 Saint Sauveur (FR)
(74) Mandataire: Brevalex
(86) Numéro de dépôt international: PCT/EP2013/052241
(87) Numéro de publication internationale: WO 2013/117543

(56) Documents cités:
- US-A- 5 824 120
- US-A1- 2005 089 759
- US-A1- 2007 059 600

## Description

### DOMAINE TECHNIQUE

La présente invention a trait à un nouvel ensemble collecteur de courant-électrode à base de silicium destiné à être utilisé dans la conception des accumulateurs au lithium.

Le domaine général de l'invention peut être ainsi défini comme étant celui des accumulateurs au lithium.

Les accumulateurs au lithium sont de plus en plus utilisés comme source d'énergie autonome, en particulier, dans les équipements électroniques portables (tels que les téléphones mobiles, les ordinateurs portables, l'outillage), où ils remplacent progressivement les accumulateurs nickel-cadmium (NiCd) et nickel-hydrure métallique (NiMH). Ils sont également très utilisés pour fournir l'alimentation en énergie nécessaire aux nouvelles microapplications, telles que les cartes à puce, les capteurs ou autres systèmes électromécaniques.

Les accumulateurs au lithium du type lithium-ion commerciaux présentent habituellement une tension nominale de 3,7 volts, une autodécharge extrêmement faible et permettent actuellement le stockage d'environ 160-180 Wh/kg et 420-500 Wh/kg dans une gamme de températures de fonctionnement étendue (-20°C à +65°C).

Ces accumulateurs au lithium fonctionnent sur le principe d'insertion-désinsertion (ou intercalation-désintercalation) du lithium selon le principe suivant.

Lors de la décharge de l'accumulateur, le lithium désinséré de l'électrode négative sous forme ionique Li⁺ migre à travers l'électrolyte conducteur ionique et vient s'intercaler dans le réseau cristallin du matériau actif de l'électrode positive. Le passage de chaque ion Li⁺ dans le circuit interne de l'accumulateur est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui se sera intercalée dans le matériau actif de l'électrode positive.

Lors de la charge de l'accumulateur, les réactions se produisant au sein de l'accumulateur sont les réactions inverses de la décharge, à savoir que :
- l'électrode négative va insérer du lithium dans le réseau cristallin du matériau la constituant ;
- l'électrode positive va libérer du lithium.

De par ce principe de fonctionnement, les accumulateurs au lithium nécessitent deux composés d'insertion différents à l'électrode négative et à l'électrode positive.

L'électrode positive est généralement à base d'oxyde lithié de métal de transition :
- du type oxyde lamellaire de formule LiMO₂, où M désigne Co, Ni, Mn, Al et des mélanges de ceux-ci, tel que LiCoO₂, LiNiO₂, Li(Ni,Co,Mn,Al)O₂; ou
- du type oxyde de structure spinelle, tel que LiMn₂O₄.

L'électrode négative peut être à base d'un matériau carboné, et en particulier à base de graphite.

Le graphite présente une capacité spécifique théorique de l'ordre de 372 mAh/g (correspondant à la formation de l'alliage LiC₆) et une capacité spécifique pratique de l'ordre de 320 mAh/g. Toutefois, le graphite présente une forte irréversibilité lors de la première charge, une perte continue de capacité en cyclage et une limitation cinétique rédhibitoire en cas de régime de charge/décharge élevé (par exemple, pour un régime de charge C/2).

En vue d'améliorer les propriétés d'insertion du lithium dans l'électrode négative, des chercheurs ont axé leurs efforts sur la recherche de nouveaux matériaux d'électrode.

Ainsi, ils ont découvert que des matériaux ou éléments susceptibles de former un alliage avec le lithium sont à même de constituer d'excellentes alternatives à l'utilisation du graphite.

C'est ainsi qu'il a été mis en évidence que l'insertion du silicium dans une électrode négative permettait d'augmenter significativement la capacité spécifique de l'électrode négative liée à l'insertion du lithium dans celle-ci, laquelle est de 320 mAh/g pour une électrode en graphite et de 3578 mAh/g pour une électrode à base de silicium (correspondant à la formation de l'alliage Li₁₅Si₄ lors de l'insertion à température ambiante du lithium dans le silicium). Ainsi, par le biais de prévisions simples, il est possible d'envisager un gain d'environ 40 et 35%, respectivement en énergie volumique et en énergie massique, si l'on substitue le graphite par du silicium dans un accumulateur classique de la filière « lithium-ion ». Par ailleurs, la fenêtre de potentiel de fonctionnement de l'alliage lithium-silicium de formule Li₁₅Si₄ (0,4-0,05 V/-Li-Li⁺) plus élevée que celle du graphite, permet d'éviter la formation d'un dépôt de lithium métallique et les risques associés, tout en laissant la possibilité de procéder à des charges plus rapides. De plus, il est établi que la réaction de formation de l'alliage lithium-silicium, conduisant à une capacité très élevée (de l'ordre de 3578 mAh/g), est réversible.

Néanmoins, l'utilisation du silicium dans une électrode négative d'un accumulateur au lithium pose un certain nombre de problèmes.

En particulier, lors de la réaction de formation de l'alliage silicium-lithium (correspondant à l'insertion du lithium dans l'électrode négative en processus de charge), l'expansion volumique entre la phase délithiée et la phase lithiée peut atteindre des valeurs allant de 240 à 400%. Cette forte expansion, suivie d'une contraction de même amplitude (correspondant à la désinsertion du lithium dans l'électrode négative lors du processus de décharge) peut entraîner rapidement des dommages mécaniques irréversibles de l'électrode.

Qui plus est, du fait du gonflement du silicium généré par l'insertion du lithium, il s'ensuit une sollicitation importante de l'interface collecteur de courant-électrode, conduisant inéluctablement à une rupture d'adhérence entre ledit collecteur et ladite électrode et voire des fissures au niveau du collecteur, ce qui contribue à réduire la surface collectrice de l'accumulateur.

Le document US2007/0059600 permet de résoudre ce problème en proposant un ensemble collecteur de courant-électrode pour batterie au lithium comprenant (par exemple) du silicium sous forme élémentaire comme matériau d'électrode et un collecteur de courant, l'électrode comprenant un premier et deuxième matériaux polymériques ayant une certaine élasticité l'un par rapport à l'autre le deuxième matériau polymérique reliant le matériau d'anode au collecteur de courant et pouvant contenir un matériau électriquement conducteur.

Les auteurs de la présente invention se sont ainsi fixé pour objectif de proposer un ensemble collecteur de courant-électrode permettant de pallier les inconvénients susmentionnés.

### EXPOSE DE L'INVENTION

Ainsi, l'invention a trait à un ensemble comprenant un collecteur de courant et une électrode comprenant du silicium sous sa forme élémentaire, caractérisé en ce que ledit collecteur de courant et ladite électrode sont liés l'un à l'autre par au moins une de leurs faces *via* une couche polymérique élastique et en ce que le collecteur de courant se présente sous forme d'un substrat conducteur d'électricité revêtu sur l'une de ses faces d'un faisceau de nanotubes de carbone, ce faisceau transversant la couche polymérique élastique de sorte à être en contact avec l'électrode.

Du fait de la présence d'une couche polymérique élastique entre l'électrode comprenant du silicium et le collecteur de courant, les déformations induites par le gonflement du silicium lors des phénomènes d'insertion du lithium dans un accumulateur au lithium sont absorbées par ladite couche polymérique, ce qui permet de préserver l'interface collecteur-électrode de tout phénomène de dégradation mécanique.

On précise que, par couche polymérique élastique, on entend une couche, comprenant un ou plusieurs polymères, apte(s), après avoir été déformée(s), à reprendre sa forme et son volume d'origine.

Cette couche polymérique élastique peut comprendre, ainsi, un ou plusieurs polymères choisis parmi les polymères thermoplastiques, les polymères thermodurcissables, les élastomères, dès lors que ceux-ci sont élastiques, et les mélanges de ceux-ci.

A titre d'exemples de polymères thermoplastiques, on peut citer les polymères issus de la polymérisation de monomères vinyliques aliphatiques ou cycloaliphatiques, tels que des polyoléfines (parmi lesquels les polyéthylènes ou encore les polypropylènes sont particulièrement adaptés pour cette invention), les polymères issus de la polymérisation de monomères vinyliques aromatiques, tels que les polystyrènes, les polymères issus de la polymérisation de monomères acryliques et/ou (méth)acrylates, les polyamides, les polyéthercétones, les polyimides.

A titre d'exemples de polymères thermodurcissables, on peut citer des résines thermodurcissables (telles que des résines époxydes, des résines polyesters) éventuellement en mélange avec des polyuréthanes ou avec des polyéthers polyols ou vice versa.

A titre d'exemples de polymères élastomères, on peut citer les caoutchoucs naturels (issus des latex collectés dans les plantations d'hévéas), les caoutchoucs de synthèse, les copolymères styrène-butadiène (connus également sous l'abréviation « SBR »), les copolymères éthylène-propylène (connus également sous l'abréviation « EPM »), les silicones. Ces polymères peuvent être amenés à être vulcanisés par de l'oxygène, du soufre ou tous autres éléments chimiques aptes à permettre cette vulcanisation.

Comme mentionné ci-dessus, la couche polymérique peut être en un mélange de polymère(s) thermoplastique(s), de polymère(s) thermodurcissable(s) et/ou de polymère(s) élastomères.

Ainsi, par exemple, la couche polymérique peut être en :
- un mélange de résines thermodurcissables (telles que des résines époxydes, des résines polyesters) avec des polyuréthanes ou avec des polyéthers polyols ;
- un mélange de polymère(s) issu(s) de la polymérisation de monomère(s) vinylique(s) aromatique(s), aliphatique(s) et/ou cycloaliphatique(s) avec un polyuréthane ou un élastomère styrène-butadiène.

De préférence, la couche polymérique élastique est formée d'un ou plusieurs polymères élastomères tels que mentionnés ci-dessus.

Cette couche polymérique élastique peut également assurer une fonction adhésive, de sorte à conférer une cohésion à l'ensemble constitué du collecteur de courant et de l'électrode.

Cette couche polymérique élastique peut être également une couche isolante de l'électricité, isolant ainsi électriquement le collecteur de courant de l'électrode.

Ainsi, l'ensemble collecteur de courant-électrode peut comprendre, en outre, des moyens de connexion électrique entre ledit collecteur de courant et ladite électrode, ces moyens pouvant se matérialiser sous forme d'éléments conducteurs de l'électricité reliant le collecteur de courant à ladite électrode et traversant ladite couche polymérique élastique. Ces moyens peuvent faire partie intégrante du collecteur de courant.

Selon l'invention, le collecteur de courant peut se présenter sous forme d'un substrat conducteur de l'électricité, par exemple, un substrat métallique (ce substrat métallique pouvant se présenter sous forme d'un feuillard métallique).

A titre d'exemple, il peut s'agir d'un substrat métallique constitué d'un ou plusieurs éléments métalliques choisis parmi le cuivre, l'aluminium, le nickel et les mélanges de ceux-ci.

Selon un mode particulier de l'invention, le collecteur de courant peut se présenter sous forme d'un substrat conducteur de l'électricité revêtu d'un faisceau de nanotubes de carbone, ces nanotubes pouvant être disposés de façon perpendiculaire par rapport à la surface dudit substrat et parallèles les uns aux autres et traversant avantageusement la couche polymérique élastique, de sorte à être en contact avec l'électrode.

Ce substrat peut être en un matériau conducteur de l'électricité susceptible de servir de base à la croissance des nanotubes de carbone.

Le substrat conducteur de l'électricité peut être :
- un substrat à base d'un élément métallique, par exemple un substrat en aluminium ou un substrat consistant en un film en matériau plastique métallisé;
- un substrat à base d'un élément métalloïde, tel qu'un substrat en silicium dopé ;
- un substrat en un matériau carboné, tel que le graphite, le graphène, des nanotubes de carbone.

Ainsi, ce faisceau de nanotubes de carbone permet la connexion électrique entre le substrat constitutif du collecteur de courant et l'électrode.

Le substrat peut présenter une épaisseur inférieure à 100 µm, par exemple inférieure à 50 µm, (par exemple compris entre 5 et 30 µm), par exemple égale à 10 µm.

En outre, le faisceau de nanotubes de carbone peut assurer, à la fois, la fonction d'injection et d'extraction du courant électrique dans le volume de l'électrode et la fonction d'assurer, quel que soit le niveau de déformation, un contact avec ladite électrode (de par la flexibilité inhérente aux nanotubes de carbone).

Qui plus est, les nanotubes de carbone assurent un rôle sécuritaire important, car ils ne se détruisent que pour de fortes intensités, par exemple, pour des valeurs d'intensité dépassant 500 nA.

Les nanotubes de carbone peuvent être des nanotubes monoparois ou multiparois et peuvent présenter une densité de répartition de 10⁸ nanotubes/cm² et présenter une longueur allant de 10 µm à 100 µm, par exemple 50 µm.

Comme mentionné ci-dessus, l'électrode comprend du silicium sous sa forme élémentaire (c'est-à-dire du silicium au degré d'oxydation 0 non combiné avec d'autres éléments).

Outre la présence de silicium, l'électrode peut comprendre un matériau carboné, tel que du noir de carbone, du charbon activé (par exemple, commercialisé sous la dénomination « Super P »), des nanotubes de carbones, qu'ils soient simple, double ou multiparois, des fibres de carbone, du graphène, du fullerène et des mélanges de ceux-ci.

D'un point de vue structurel, le silicium et le matériau carboné peuvent s'organiser sous forme d'une structure du type « coeur-coquille », le coeur étant constitué du matériau carboné et la coquille étant constituée de silicium, ou vice versa.

A titre d'exemple, l'électrode peut comprendre des structures du type « coeur-coquille », pour lesquelles :
- le coeur est constitué de nanotubes de carbone et la coquille est constituée de silicium ; ou
- le coeur est constitué de silicium et la coquille est constituée de graphène ou de fullerène.

A titre d'exemple, un ensemble particulier conforme à l'invention est un ensemble comprenant :
- en tant que collecteur de courant, un substrat en aluminium revêtu sur l'une de ses faces d'un faisceau de nanotubes de carbone ;
- en tant qu'électrode, une électrode en matériau composite comprenant du silicium sous sa forme élémentaire et un matériau carboné (par exemple, un matériau carboné tel que défini ci-dessus),

le faisceau de nanotubes de carbone traversant la couche polymérique élastique de sorte à être en contact avec ladite électrode.

En outre, la couche polymérique élastique peut être en un copolymère styrène-butadiène.

L'ensemble conforme à l'invention peut être réalisé par des techniques simples à la portée de l'homme du métier.

Ainsi, l'ensemble conforme à l'invention peut être réalisé par pressage de la couche polymérique élastique prise en sandwich entre le collecteur de courant et l'électrode.

L'ensemble conforme à l'invention peut être également réalisé par la succession d'étapes suivantes :
- une étape de dépôt par projection d'une couche polymérique élastique sur une face de l'électrode ;
- une étape de pressage du collecteur de courant sur la couche polymérique élastique ainsi obtenue.

Plus particulièrement, l'étape de projection peut être réalisée par projection électrostatique, projection par décharge corona ou la projection par flamme.

Lorsque le collecteur de courant consiste en un substrat métallique revêtu d'un faisceau de nanotubes de carbone, celui-ci peut être préparé préalablement à l'étape de pressage susmentionnée, cette préparation pouvant consister à faire croître les nanotubes de carbone sur ledit substrat.

Ces nanotubes de carbone peuvent être préparés selon différentes méthodes, parmi lesquelles on peut citer :
- les procédés haute température utilisant une source d'énergie choisie parmi le laser, l'arc électrique et en utilisant une cible carbonée ;
- les procédés moyenne température, basés sur la décomposition d'un gaz hydrocarboné sur un catalyseur métallique.

Pour les procédés haute température, la source énergétique (arc électrique ou ablation laser) sert à vaporiser un élément principalement constitué de carbone, tel que le graphite, communément appelé cible, en des endroits prédéterminés du substrat, de sorte qu'à l'issue de ce procédé un faisceau de nanotubes de carbone soit formé. La forte concentration d'énergie générée par la source permet d'élever la température de façon locale, à proximité de la cible, au-delà de 3000°C. A partir du moment où la cible se vaporise, il se crée un plasma contenant des particules de carbone de dimensions atomiques. Ces particules réagissent entre elles au sein du plasma pour former des nanotubes de carbone.

Pour les procédés moyenne température basés sur la décomposition d'un gaz hydrocarboné sur un catalyseur métallique, on peut citer plus particulièrement les procédés du type CVD conventionnel (CVD signifiant Chemical Vapour Déposition pour Dépôt Chimique en Phase Vapeur) se déroulant, de préférence, en lit fluidisé. Le gaz hydrocarboné peut être l'acétylène, le xylène, le méthane, l'éthylène, le propylène. Dans des conditions particulières de pression et de température, le gaz entrant en contact avec les particules métalliques de catalyseur se décompose et les particules de carbone réagissent entre elles pour former des nanotubes de carbone, à partir de l'emplacement des particules métalliques de catalyseur. Les particules métalliques de catalyseur peuvent être à base de Ni, Co, Fe et sont déposées sur le substrat métallique, éventuellement recouvert d'une couche barrière (par exemple, en nitrure de titane, en silice) pour éviter une diffusion du catalyseur dans le substrat. Ces particules métalliques de catalyseur sont disposées, de préférence, selon un arrangement prédéterminé, en fonction de la quantité de nanotubes de carbone envisagé et l'espacement souhaité entre les nanotubes de carbone. Pour contrôler le dépôt des particules métalliques de catalyseur sur le substrat, il peut être envisagé, préalablement au dépôt de ces particules, de masquer physiquement ou chimiquement, selon le principe de la photolithographie, les parties du substrat que l'on souhaite dépourvues de nanotubes de carbone à l'issue du procédé.

De façon générale, la température de réaction ne dépasse pas 900°C.

Une fois que les nanotubes ont été synthétisés, il peut être envisageable de procéder à une étape d'élimination du(des) catalyseur(s), afin que celui-ci n'interagisse pas avec le lithium lorsque ce matériau sera utilisé dans une électrode négative pour accumulateur au lithium. L'élimination des particules métalliques de catalyseur peut se faire par attaque chimique à l'acide nitrique suivi, dans certains cas, d'un traitement thermique à haute température (par exemple, de 700°C à 2000°C), afin d'éliminer les particules de catalyseur restantes, de même que d'éventuelles impuretés de surface.

Les procédés moyenne température basés sur l'utilisation de particules de catalyseur sont particulièrement avantageux pour la mise en oeuvre de l'invention, dans la mesure où ils permettent une sélectivité dans l'arrangement des nanotubes de carbone, en jouant sur la disposition des particules métalliques de catalyseurs sur le substrat, la croissance des nanotubes se faisant uniquement à partir de l'emplacement de ces particules.

Avec ce type de collecteur de courant, l'étape de pressage s'accompagnera d'une traversée des nanotubes de carbone à travers la couche polymérique élastique, de sorte à ce qu'ils entrent en contact avec l'électrode.

L'électrode, quant à elle, lorsqu'elle ne préexiste pas, peut être préparée préalablement à l'étape de pressage.

A titre d'exemple, lorsqu'elle est composée d'un matériau composite comprenant du silicium et des nanotubes de carbone, elle peut être préparée par la succession d'étapes suivantes :
- une étape de préparation d'un mélange comprenant du silicium et des nanotubes de carbone, en présence éventuellement d'un liant (par exemple, un alginate) ;
- une étape de consolidation de ce mélange sous forme d'une électrode, par exemple, par traitement thermique.

Avant l'étape de pressage, la couche polymérique élastique peut être préalablement mise en contact avec l'électrode, l'ensemble résultant de cette couche polymérique élastique avec l'électrode étant ensuite pressé avec le collecteur de courant via une face de la couche polymérique élastique.

L'ensemble collecteur de courant-électrode conforme à l'invention peut être mis en place dans des accumulateurs au lithium, où l'électrode de cet ensemble constituera l'électrode négative.

Cet ensemble utilisé pour constituer des électrodes négatives pour accumulateur au lithium présente l'avantage notamment d'être très résistant, après un nombre conséquent de cyclage, du fait que la déformation de la couche d'électrode est absorbée par la couche polymérique élastique, qui ne se décolle ainsi plus du collecteur de courant.

L'invention a ainsi trait, également à un accumulateur au lithium comprenant au moins un ensemble tel que défini ci-dessus. Plus particulièrement, l'accumulateur au lithium appartient à la filière « lithium-ion », c'est-à-dire que le lithium ne se présente jamais dans l'accumulateur sous forme métallique mais fait un va-et-vient entre les deux composés d'insertion du lithium contenus dans les électrodes positive et négative à chaque charge et décharge de l'accumulateur.

L'accumulateur au lithium de l'invention comprend classiquement au moins une cellule électrochimique comprenant :
- un ensemble tel que défini ci-dessus, pour lequel l'électrode constitue l'électrode négative de l'accumulateur;
- une électrode positive ; et
- un séparateur disposé entre ledit ensemble *via* la couche d'électrode et ladite électrode positive, lequel séparateur comprend un électrolyte conducteur d'ions lithium.

L'électrode positive peut être en lithium métallique ou peut comprendre un matériau choisi parmi les phosphates lithiés de métaux de transition, les oxydes lithiés de métaux de transition et les mélanges de ceux-ci.

A titre d'exemples de phosphates lithiés utilisables, on peut citer LiFeₓ₁Mn₁₋ₓ₁PO₄ avec 0≤x₁≤₁.

Ces matériaux présentent une structure de type olivine.

A titre d'exemples d'oxydes lithiés de métaux de transition, on peut citer les oxydes lamellaires Li(Co, Ni, Mn, Al)O₂ et les oxydes de structure spinelle de type Li₁₊ₓMn₂O₄ avec 0≤x≤0,1.

Le séparateur peut se présenter sous la forme d'un élément poreux contenant un électrolyte liquide conducteur d'ions lithium.

L'élément poreux peut se présenter sous forme d'un polymère, par exemple en polyéthylène ou en polypropylène ou une association des deux.

L'électrolyte liquide comprend par exemple un solvant liquide aprotique, par exemple, du type carbonaté, tels que le carbonate d'éthylène, le carbonate de propylène, le carbonate de diméthyle ou le carbonate de diéthyle, un solvant ou mélange de solvants du type éther, tel que le diméthoxyéthane, le dioxolane, le dioxane, dans lequel est dissous un sel de lithium.

A titre d'exemples, le sel de lithium peut être choisi dans le groupe constitué de LiPF₆, LiClO₄, LiBF₄, LiAsF₆, LiCF₃SO₃, LiN(CF₃SO₂)₃, LiN(C₂F₅SO₂).

L'invention va être, à présent, décrite en référence au mode de réalisation particulier donné ci-dessous à titre illustratif et non limitatif.

### BRÈVE DESCRIPTION DES DESSINS

La figure 1 représente une vue en coupe d'un ensemble collecteur de courant-électrode conforme au mode de réalisation particulier exposé ci-dessous.
La figure 2 représente un graphique illustrant l'évolution de la capacité C (en mA.h/g) en fonction du nombre de cycles N, la courbe a correspondant à l'essai réalisé avec l'ensemble conforme à l'invention et la courbe b correspondant à l'essai réalisé avec un ensemble non conforme à l'invention.

### EXPOSÉ DÉTAILLÉ D'UN MODE DE RÉALISATION PARTICULIER

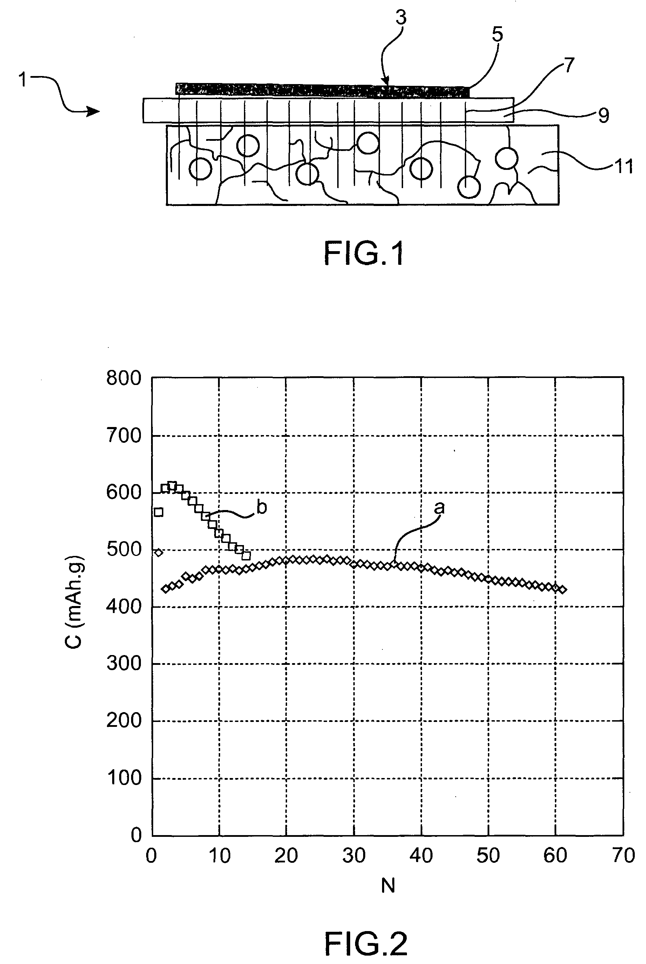

L'exemple présenté ci-dessous illustre la préparation d'un ensemble collecteur de courant-électrode représenté sur la figure 1 en annexe, cet ensemble étant composé d'un empilement comprenant un substrat collecteur de courant en aluminium revêtu, sur une de ses faces, d'un tapis de nanotubes de carbone, le substrat étant en contact *via* sa face revêtu du tapis, avec une première face d'une couche polymérique élastique, cette dernière étant en contact, via une deuxième face opposée à ladite première face, avec une couche d'électrode.

### 1) Réalisation de l'électrode

Dans un premier temps, il est procédé à la préparation d'une encre par mélange de 0,3 g d'alginate, de 1,5 g d'une poudre de silicium (ayant une taille moyenne de particules de 310 nm), de 0,1125 g de fibres de carbone courtes (< 10 µm) et 0,1125 g de noir de carbone de type super P.

L'alginate a pour fonction :
a) de lier les matières actives avec le conducteur électronique ;
b) de faire adhérer l'électrode aux nanotubes de carbone et à la couche polymérique élastique.

La poudre de silicium utilisée est passivée avec une couche d'oxyde n'allant pas au-delà de 10 nm d'épaisseur, la surface active ne devant pas dépasser 30 m²/g_{.}

Dans un deuxième temps, l'encre ainsi préparée est déposée, par enduction, sur un support composite latex-alumine pour former une couche d'épaisseur 150 µm, cette couche étant ensuite séchée puis comprimée à 1000 kg/cm².

Le support composite latex-alumine répond aux spécificités suivantes :
- un ratio en volume de 20% de latex et 80% d'alumine ;
- une énergie de surface comprise entre 20 et 60 mJ/m² ;
- une distribution des pores suivante: [0-200 nm]=[10% et 20%] ; [200 nm-600 nm]=[30% et 75%] et [>600 nm]=[5% et 60%).

Enfin, dans un troisième temps, l'ensemble résultant est soumis à une étape de carbonisation à 700°C pendant 1 heure en présence d'un mélange gazeux légèrement réducteur argon-H₂ (3% en volume de H₂), moyennant quoi il subsiste une couche d'électrode. Cette étape de carbonisation permet à l'électrode de ne plus contenir de composés organiques, qui sont remplacés par du carbone amorphe résultant de cette carbonisation. Le carbone amorphe issu de la carbonisation joue le rôle de ciment de la structure d'électrode et garantit ainsi sa cohésion. Lors de la carbonisation, le latex est aussi détruit par un mécanisme pyrolitique. L'étape de carbonisation est suivie d'une étape de frittage à 1400°C sous air pendant 1 heure, de sorte à consolider les grains d'alumine subsistant du traitement de carbonisation.

### 2) Réalisation de l'empilement

Sur la couche d'électrode obtenue préalablement (d'une épaisseur de 2 µm), il est déposé, par pulvérisation, une couche polymérique en un latex styrène-butadiène flexible, isolante et adhérente.

Sur cette couche polymérique est appliqué, par pressage, un collecteur de courant comprenant une feuille d'aluminium d'une épaisseur de 10 µm) revêtue d'un faisceau de nanotubes de carbone monoparois et multiparois d'une longueur de 10 µm, moyennant quoi, les nanotubes de carbone traversent la couche polymérique élastique et se retrouvent en contact avec la couche d'électrode.

Il subsiste un ensemble comprenant un empilement de couches tel que représenté sur la figure 1 jointe en annexe, pour laquelle les références reportées sur cette figure représentent respectivement les éléments suivants :
- pour la référence 1, l'ensemble complet obtenu à l'issue de cet exemple ;
- pour la référence 3, le collecteur de courant ;
- pour la référence 5, le substrat en aluminium appartenant au collecteur au courant ;
- pour la référence 7, le faisceau de nanotubes de carbone partant du substrat 5 et traversant la couche polymérique de sorte à arriver en contact avec la couche d'électrode ;
- pour la référence 9, la couche polymérique élastique ; et
- pour la référence 11, la couche d'électrode en tant que telle.

L'ensemble obtenu conformément à cet exemple monté dans une structure du type pile bouton a été soumis à un test de cyclage à une capacité C/20 (la formation étant faite à C/20 pendant 5 heures puis C/10 jusqu'à 4,2 V et le cyclage à 20°C à C/20 à 100% de la capacité).

Une pile bouton comprenant un ensemble non conforme à l'invention a été soumise à ce même test de cyclage, cette pile bouton étant identique à celle mentionnée ci-dessus, si ce n'est que l'ensemble ne comporte pas de couche polymérique.

Cet ensemble non conforme à l'invention a été réalisé à partir d'une électrode enduite d'une encre identique à celle utilisée pour l'exemple de l'invention sans recourir à la couche polymérique.

Après séchage, cette électrode est poinçonnée à un diamètre de 14 mm et compressée sous une charge de 2 tonnes. A cette électrode sous forme de pastille est associée une pastille de séparateur Selgard et une pastille de séparateur Viledon. Ce sandwich ainsi formé est monté dans une pile bouton avec trois cales de pression et l'ensemble est disposé dans une boîte à gant anhydre pour le remplissage d'électrolyte et le sertissage. L'électrode positive est formée de lithium métallique. Il n'y a pas de couche polymérique interposée entre l'électrode et le collecteur de courant.

Les résultats de ces tests de cyclage sont reportés sur la figure 2, qui est un graphique illustrant l'évolution de la capacité C (en mA.h/g) en fonction du nombre de cycles N, la courbe a correspondant à l'essai réalisé avec l'ensemble conforme à l'invention et la courbe b correspondant à l'essai réalisé avec l'ensemble non conforme à l'invention.

Pour l'essai réalisé avec l'ensemble non conforme à l'invention, la capacité chute très rapidement, dès lors que le nombre de cycles augmente, ce qui n'est pas le cas de l'essai réalisé avec l'ensemble conforme à l'invention.

## Revendications

1. Ensemble comprenant un collecteur de courant et une électrode comprenant du silicium sous sa forme élémentaire, **caractérisé en ce que** ledit collecteur de courant et ladite électrode sont liés l'un à l'autre par au moins une de leurs faces *via* une couche polymérique élastique et **en ce que** le collecteur de courant se présente sous forme d'un substrat conducteur de l'électricité revêtu sur l'une de ses faces d'un faisceau de nanotubes de carbone, ce faisceau traversant la couche polymérique élastique de sorte à être en contact avec l'électrode.

2. Ensemble selon la revendication 1, dans lequel la couche polymère élastique comprend un ou plusieurs polymères choisis parmi les polymères thermoplastiques, les polymères thermodurcissables, les élastomères et les mélanges de ceux-ci.

3. Ensemble selon la revendication 2, dans lequel les polymères thermoplastiques sont choisis parmi les polyoléfines, les polystyrènes.

4. Ensemble selon la revendication 2, dans lequel les polymères élastomères sont choisis parmi les caoutchoucs naturels, les caoutchoucs de synthèse, les copolymères styrène-butadiène, les copolymères éthylène-propylène et les silicones.

5. Ensemble selon la revendication 1, dans lequel le substrat collecteur de l'électricité est un substrat métallique en un élément choisi parmi le cuivre, l'aluminium, le nickel et les mélanges de ceux-ci.

6. Ensemble selon l'une quelconque des revendications précédentes, dans lequel l'électrode comprend un matériau carboné.

7. Ensemble selon la revendication 6, dans lequel le matériau carboné est du noir de carbone, du charbon activé, des nanotubes de carbones, qu'ils soient simple, double ou multiparois, des fibres de carbone, du graphène, du fullerène et des mélanges de ceux-ci.

8. Ensemble selon la revendication 6, dans lequel le silicium et le matériau carboné s'organisent sous forme d'une structure du type « coeur-coquille », le coeur étant constitué du matériau carboné et la coquille étant constituée de silicium, ou vice versa.

9. Ensemble selon la revendication 8, dans lequel l'électrode comprend des structures du type « coeur-coquille », pour lesquelles :
- le coeur est constitué de nanotubes de carbone et la coquille est constituée de silicium ; ou
- le coeur est constitué de silicium et la coquille est constituée de graphène ou de fullerène.

10. Ensemble selon l'une quelconque des revendications précédentes, comprenant :
- en tant que collecteur de courant, un substrat en aluminium revêtu sur l'une de ses faces d'un faisceau de nanotubes de carbone ;
- en tant qu'électrode, une électrode en matériau composite comprenant du silicium et un matériau carboné,
le faisceau de nanotubes de carbone traversant la couche polymérique de sorte à être en contact avec ladite électrode.

11. Ensemble selon l'une quelconque des revendications précédentes, dans lequel l'électrode est une électrode négative d'un accumulateur au lithium.

12. Accumulateur au lithium comprenant au moins une cellule électrochimique comprenant :
- un ensemble tel que défini selon l'une quelconque des revendications 1 à 11, pour lequel l'électrode constitue l'électrode négative de l'accumulateur ;
- une électrode positive ; et
- un séparateur disposé entre ledit ensemble *via* la couche d'électrode et ladite électrode positive, lequel séparateur comprend un électrolyte conducteur d'ions lithium.

## Patentansprüche

1. Anordnung, umfassend einen Stromabnehmer und eine Elektrode, umfassend Silizium in seiner elementaren Form, **dadurch gekennzeichnet, dass** der Stromabnehmer und die Elektrode miteinander verbunden sind über mindestens eine ihrer Flächen über eine elastische polymere Schicht, und dass der Stromabnehmer vorliegt in Form eines Substrats, das ein Stromleiter ist, beschichtet auf einer seiner Flächen mit einem Nanoröhrenbündel aus Kohlenstoff, wobei das Bündel durch die elastische polymere Schicht derart läuft, dass es in Kontakt mit der Elektrode ist.

2. Anordnung nach Anspruch 1, in welcher die elastische polymere Schicht ein oder mehrere Polymere umfasst, ausgewählt aus thermoplastischen Polymeren, wärmehärtbaren Polymeren, Elastomeren und Gemischen dieser.

3. Anordnung nach Anspruch 2, worin die thermoplastischen Polymere ausgewählt sind aus den Polyolefinen, den Polystyrolen.

4. Anordnung nach Anspruch 2, worin die thermoplastischen Polymere ausgewählt sind aus den Naturkautschuken, synthetischen Kautschuken, Styrol-Butadien-Copolymeren, Ethylen-Propylen-Copolymeren und den Slikonen.

5. Anordnung nach Anspruch 1, worin das Stromabnehmersubstrat ein metallisches Substrat ist, aus einem Element, ausgewählt aus Kupfer, Aluminium, Nickel und Gemischen davon.

6. Anordnung nach einem der vorhergehenden Ansprüche, worin die Elektrode ein kohlenstoffhaltiges Material umfasst.

7. Anordnung nach Anspruch 6, worin das kohlenstoffhaltige Material aus Kohleschwarz, Aktivkohle, Kohlenstoffnanoröhren, die einfach, doppelt oder mehrschichtig sind, aus Kohlefasern, Graphen, Fullaren und Gemischen davon ist.

8. Anordnung nach Anspruch 6, worin das Silizium und das kohlenstoffhaltige Material aufgebat sind in Form einer Struktur des Typs "Kern-Schale", wobei der Kern aus kohlenstoffhaltigem Material und die Schale aus Silizium besteht oder umgekehrt.

9. Anordnung nach Anspruch 8, worin die Elektrode Strukturen des "Kern-Schale"-Typs umfasst, für welche:
- der Kern aus Nanoröhren aus Kohlenstoff besteht und die Schale aus Silizium besteht; oder
- der Kern aus Slizium besteht und die Schale aus Graphen oder Fulleren besteht.

10. Anordnung nach einem der vorhergehenden Ansprüche, umfassend:
als Stromabnehmer ein Substrat aus Aluminium, beschichtet auf einer seiner Oberflächen mit einem Bündel von Nanoröhren aus Kohlenstoff;
als Elektrode eine Elektrode aus einem Verbundmaterial, umfassend Silizium und ein kohlenstoffhaltiges Material;
wobei das Bündel kohlenstoffhaltiger Nanoröhren die polymere Schicht durchquert, derart, dass es in Kontakt mit der Elektrode ist.

11. Anordnung nach einem der vorhergehenden Ansprüche, worin die Elektrode eine negative Elektrode eines Lithiumakkumulators ist.

12. Lithiumakkumulator, umfassend mindestens eine elektrochemische Zelle, umfassend:
- eine Anordnung nach einem der Ansprüche 1 bis 11, für welche die Elektrode die negative Elektrode des Akkumulators bildet;
- eine positive Elektrode; und
- einen Separator, angeordnet zwischen der Anordnung über die Beschichtung der Elektrode und der positiven Elektrode, worin der Separator einen Elektrolytleiter für Lithiumionen umfasst.

## Claims

1. Assembly comprising a current collector and an electrode comprising silicon in its elementary form, **characterized in that** said current collector and said electrode are connected together via at least one of the surfaces thereof by an elastic polymer layer and **in that** said current collector is in the form of an electricity conducting substrate coated on one of the surfaces thereof with a bundle of carbon nanotubes, said bundle passing through the elastic polymer layer so as to be in contact with the electrode.

2. Assembly according to claim 1, in which the elastic polymer layer comprises one or more polymers selected from thermoplastic polymers, thermosetting polymers, elastomers and mixtures thereof.

3. Assembly according to claim 2, in which the thermoplastic polymers are selected from polyolefins, polystyrenes.

4. Assembly according to claim 2, in which the elastomeric polymers are selected from natural rubbers, synthetic rubbers, styrene-butadiene copolymers, ethylene-propylene copolymers and silicones.

5. Assembly according to claim 1, in which the metal substrate is made of an element selected from copper, aluminium, nickel and mixtures thereof.

6. Assembly according to any of the preceding claims, in which the electrode comprises a carbon material.

7. Assembly according to claim 6, in which the carbon material is carbon black, activated carbon, carbon nanotubes, whether they are single, double or multi-walled, carbon fibres, graphene, fullerene and mixtures thereof.

8. Assembly according to claim 6, in which the silicon and the carbon material organise themselves in the form of a "core-shell" type structure, the core being constituted of carbon material and the shell being constituted of silicon, or vice versa.

9. Assembly according to claim 8, in which the electrode comprises "core-shell" type structures, for which:
- the core is constituted of carbon nanotubes and the shell is constituted of silicon; or
- the core is constituted of silicon and the shell is constituted of graphene or fullerene.

10. Assembly according to any of the preceding claims, comprising:
- as current collector, an aluminium substrate coated on one of the surfaces thereof with a bundle of carbon nanotubes;
- as electrode, an electrode made of composite material comprising silicon and a carbon material,
the bundle of carbon nanotubes passing through the polymeric layer so as to be in contact with said electrode.

11. Assembly according to any of the preceding claims, in which the electrode is a negative electrode of a lithium battery.

12. Lithium battery comprising at least one electrochemical cell comprising:
- an assembly as defined according to any of claims 1 to 11, for which the electrode constitutes the negative electrode of the battery;
- a positive electrode; and
- a separator arranged between said assembly via the electrode layer and said positive electrode, which separator comprises a lithium ion conducting electrolyte.
